# EUROPÄISCHE PATENTSCHRIFT

(11) **EP 2 173 592 B1**
(45) Veröffentlichungstag und Bekanntmachung des Hinweises auf die Patenterteilung: **25.01.2012**
(21) Anmeldenummer: 08802974.9
(22) Anmeldetag: 07.08.2008
(51) Int. Cl.: B60T 11/26

(54) **AUSGLEICHSBEHÄLTER FÜR EINE HYDRAULISCHE KRAFTFAHRZEUGBREMSANLAGE**
COMPENSATION TANK FOR A HYDRAULIC MOTOR VEHICLE BRAKE SYSTEM
RECIPIENT DE COMPENSATION POUR UNE INSTALLATION HYDRAULIQUE DE FREIN DE VEHICULE AUTOMOBILE

(30) Priorität: 07.08.2007 DE 102007037225
(43) Veröffentlichungstag der Anmeldung: 14.04.2010
(73) Patentinhaber: Continental Teves AG & Co. OHG, 60488 Frankfurt (DE)
(72) Erfinder: TANDLER, Peter, 61476 Kronberg (DE); SCHLICHT, Stephan, 64569 Nauheim (DE); NEUMANN, Hans-Jürgen, 65428 Rüsselsheim (DE)
(86) Internationale Anmeldenummer: PCT/EP2008/060393
(87) Internationale Veröffentlichungsnummer: WO 2009/019302

(56) Entgegenhaltungen:
- DE-A1- 19 754 431
- DE-A1-102005 048 696

## Beschreibung

Die Erfindung betrifft einen Ausgleichsbehälter für eine hydraulische Kraftfahrzeugbremsanlage.

Aus der DE 197 54 431 A1 ist beispielhaft ein Bremsflüssigkeitsbehälter mit einem vom Gehäuse nach außen abstehenden Einfüllstutzen und mit einem in dem Einfüllstutzen platzierten Sieb bekannt. Es liegt in der Natur der Sache, dass engmaschige und entsprechend wirkungsvolle Siebe einen Flüssigkeitseinfüllvorgang maßgeblich verzögern können, so dass diese oft unautorisiert entfernt oder weggelassen werden. Um eine unautorisierte Siebentfernung zu vermeiden, werden daher Sicherungsmittel vorgeschlagen. Durch andere Quelle werden gesonderte Be- und Entlüftungsöffnungen vorgeschlagen, die das Nachfließen durch das Sieb hindurch verbessern sollen. Jedoch ist es besonders bei sehr schnellen, insbesondere automatisierten Druckbefüllvorgängen denkbar, dass die gesonderten Belüftungsöffnungen zweckwidrig und in unzulässiger Weise zur Umgehung vom Sieb ausgenutzt werden, so dass ungesiebtes Druckmittel in die Kraftfahrzeugbremsanlage eintritt.

Eine besondere Problematik besteht darin, dass moderne Fahrzeughersteller eine sogenannte Vakuumbefüllung an deren Montageband wünschen. Diese Hochvakuumbefüllung erfordert einen Befüllautomaten mit einem Adapterteil das pneumatisch dicht an Stelle von einem druckausgleichenden Behälterdeckel tritt, und wobei ein Rohrstück in den Einfüllstutzen hineinragt, um vor der Druckmittelbefüllung ein Vakuum im gesamten Bremssystem herzustellen, und nach Flüssigkeitsbefüllung automatisch einen definierten Flüssigkeitspegel im Bremssystem zu nivellieren. Dies erfolgt prinzipiell, indem nach der Vakumherstellung und der nachgeschalteten Druckmittelbefüllung (mit Überdruck von beispielsweise 1 bar) sowie einer weiterhin nachgeschalteten Beruhigungsphase ggf. überflüssiges Druckmittel zwecks Nivellierung abgesaugt wird. Damit das Rohrstück bei einem kleinbauenden Behälter in jedem Fall ausreichend tief in den Behälter eingeführt werden kann, sind abnehmbare Filter vorteilhaft. Diese sind jedoch mit dem Nachteil verknüpft, dass diese verloren, oder deren Montage vergessen werden kann.

Aus der DE 10 2005 048 696 A1 ist ein gattungsgemäßer Ausgleichsbehälter bekannt. Ein Filtereinsatz für eine Einfüllöffung des bekannten Ausgleichsbehälters weist einen Grundkörper auf, welcher einstückig an das Gehäuse des Ausgleichsbehälters angeformt ist. Gemäß einer weiteren Ausführungsform ist Filtereinsatz einteilig vorgesehen und weist ein Filterelement auf, welches bei der Herstellung des Filtereinsatzes hergestellt wird.

Ferner ist aus der DE 197 54 431 A1 ein Ausgleichsbehälter bekannt, in dessen Einfüllstutzen ein eingesetztes Sieb über einen Schnapp- bzw. einen Rastverschluss befestigt ist, welcher nur zerstörbar lösbar ist.

Aufgabe der vorliegenden Erfindung ist es, einen universellen und dennoch kostengünstigen und einfach herstellbaren Ausgleichsbehälter vorzuschlagen, der ohne Einschränkungen für eine schnelle, auch automatisierte, Befüllung geeignet ist, und dennoch das Bremssystem zuverlässig vor jeglichem Schmutzeintrag schützt, selbst wenn der Füllvorgang stark beschleunigt, oder ohne genormte Adapterteile, vorgenommen wird.

Die Aufgabe wird erfindungsgemäß durch die Gesamtheit der Merkmale vom Patentanspruch 1 gelöst. Ein Einfüllstutzen definiert ein Puffervolumen, um einen möglicherweise gehemmten Nachlaufvorgang durchs Filter zu kompensieren. Infolge integrierter Filterausbildung kann der Filter nicht einfach vergessen werden. Eine definiert-abgesicherte Platzierung vom Filter stellt sicher, dass dieses in optimierter Weise mit dem verwendeten Befüllautomaten harmoniert. Dadurch kann der Filter nicht falsch montiert oder vergessen werden.

Die einen Schwimmer umfassende Behälterwarnvorrichtung ist in dem Einfüllstutzen integriert vorgesehen und der Füllfilter ist im Bereich vom Einfüllstutzen sowie unterhalb von der Behälterwarnvorrichtung angeordnet ist und sich an den Behälterfüllstutzen anschließend in die Druckmittekammer erstreckt, wobei die Wandung und der Boden von dem Füllfilter Filteröffnungen aufweist, welche sowohl unterhalb als auch oberhalb in Bezug auf ein maximal zulässiges Behälterfüllstandsniveau angeordnet sind.
Dadurch wird der Bauraum im Fahrzeug gut ausgenutzt, und es wird gleichzeitig verhindert, dass an der Behälterwarnvorrichtung haftende Verunreinigungen unter Umgehung vom Filter ins Bremssystem gelangen können. Weiterhin stört die Behälterwarnvorrichtung nicht beim Einführen des oben genannten Rohrstücks vom Befüllautomaten. Als besonderer Vorteil ist anzugeben, dass Schwappvorgänge im Behälter - die bei konventionellen Behältern Fehlsignale auslösen können - durch die Filterwirkung gedämpft werden, so dass die Behälterwarnvorrichtung gewissermaßen ein geglättetes Signal emittiert.
Da die Filteröffnungen sowohl unterhalb als auch oberhalb bezüglich eines maximalen Flüssigkeitsfüllstandes in einer Wandung vom Einfüllstutzen angeordnet sind, wird in jedem Falle eine hydraulische Filterwirkung erzielt, und gleichzeitig wird die pneumatische Entlüftung durch den Filter geführt. Mit anderen Worten kann das Filter nicht einfach, unter Entfall der Filterwirkung, umgangen werden.

Bei einer besonders bevorzugten Ausführungsform ist ein Einfüllstutzen axial in Richtung Druckmittelkammer verlängert ausgebildet.
Obwohl der beschriebene Schwimmer prinzipiell durch einen, zentrisch im Einfüllstutzen angeordneten, Kontaktträger geführt sein kann, ermöglicht der verlängerte Einfüllstutzen eine gesonderte oder zusätzliche Führung von dem Schwimmer.

Um die Montage des Füllfilters, und eine damit verbundene Fehlerquelle, gänzlich zu eliminieren, ist gemäß einer vorteilhaften Ausführungsform der Erfindung der Füllfilter einstückig ausgebildet.

Vorzugsweise ist der Füllfilter aus einem Werkstoff des Gehäuses des Ausgleichsbehälters ausgebildet, und ist an das Gehäuse angespritzt vorgesehen. Dadurch können das Gehäuse bzw. das Gehäuseoberteil und der Füllfilter in einem Arbeitsgang hergestellt werden.

Eine Nachbearbeitung des Gehäuses kann dadurch entfallen, dass der Füllfilter Filteröffnungen aufweist, welche bei der Herstellung des Gehäuses hergestellt werden. Die Filteröffnungen werden bei der Herstellung des Gehäuses mittels eines speziellen Spritzwerkzeuges erzeugt. Beschädigungen des Filtergewebes - beispielsweise bei der Montage - können damit gänzlich ausgeschlossen werden.

Gemäß einer nebengeordneten Lösung ist der Füllfilter einteilig vorgesehen und weist Filteröffnungen auf, welche bei der Herstellung des Füllfilters hergestellt werden, wobei der Füllfilter einen umlaufenden Kragen aufweist, mittels welchem er in den Einfüllstutzen einsetzbar ist, und an der Wandung Haltemittel angeformt vorgesehen sind, welche den Füllfilter im Ausgleichsbehälter sichernder Füllfilter einteilig vorgesehen ist und Filteröffnungen aufweist, welche bei der Herstellung des Füllfilters hergestellt werden.
Die einen Schwimmer umfassenden Behälterwarnvorrichtung ist in dem Einfüllstutzen integriert angeordnet und der Füllfilter ist im Bereich vom Einfüllstutzen sowie unterhalb von der Behälterwarnvorrichtung angeordnet, wobei die Wandung und der Boden von dem Füllfilter Filteröffnungen aufweist, welche sowohl unterhalb als auch oberhalb in Bezug auf ein maximal zulässiges Behälterfüllstandsniveau angeordnet sind. Der Füllfilter ist somit einfach und kostengünstig herstellbar und die Beschädigung von Filtergewebe kann ausgeschlossen werden. Ferner ist die Positionierung des Füllfilters durch die Haltemittel sichergestellt.

Sind die Haltemittel als Schnappelemente ausgebildet, welche nach Einsetzen des Füllfilters in den Ausgleichsbehälter hinter einem Kragen des Einfüllstutzens einschnappen, ist die Montage des Füllfilters besonders schnell und einfach.

Vorzugsweise ist an dem umlaufenden Kragen des Füllfilters ein umlaufender Dichtwulst vorgesehen, welcher die Abdichtung des Füllfilters in einfacher Weise ermöglicht.

Grundsätzlich kann bei allen vorstehend beschriebenen Ausführungsformen der Füllfilter als Sieb vorgesehen sein.

Die Sieb- oder Maschenweite vom Filter ist für einen guten Kompromiss zwischen Filterwirkung bei beschleunigtem Flüssigkeitsdurchtritt und dennoch guter pneumatischer Entlüftungswirkung auf den Bereich zwischen etwa 50 bis 500 µm beschränkt. Bevorzugt wird eine Weite von etwa 300 µm eingesetzt.

Weitere Merkmale, Vorteile und Anwendungsmöglichkeiten der Erfindung gehen aus der nachfolgenden Beschreibung von Ausführungsbeispielen sowie anhand der Zeichnung hervor, welche Ausführungsformen zeigt. Dabei zeigt jeweils stark schematisiert sowie teilweise im Schnitt:
- Figur 1: ein erstes Ausführungsbeispiel des erfindungsgemäßen Ausgleichsbehälters im Schnitt;
- Figur 2: ein zweites, nicht beanspruchtes Ausführungsbeispiel des erfindungsgemäßen Ausgleichsbehälters im Schnitt;
- Figur 3a und 3b: Filterelemente für ein Ausgleichsbehälter gemäß Fig. 2;
- Figur 4: ein drittes Ausführungsbeispiel des erfindungsgemäßen Ausgleichsbehälters im Schnitt und
- Figur 5: ein viertes Ausführungsbeispiel des erfindungsgemäßen Ausgleichsbehälters im Schnitt.

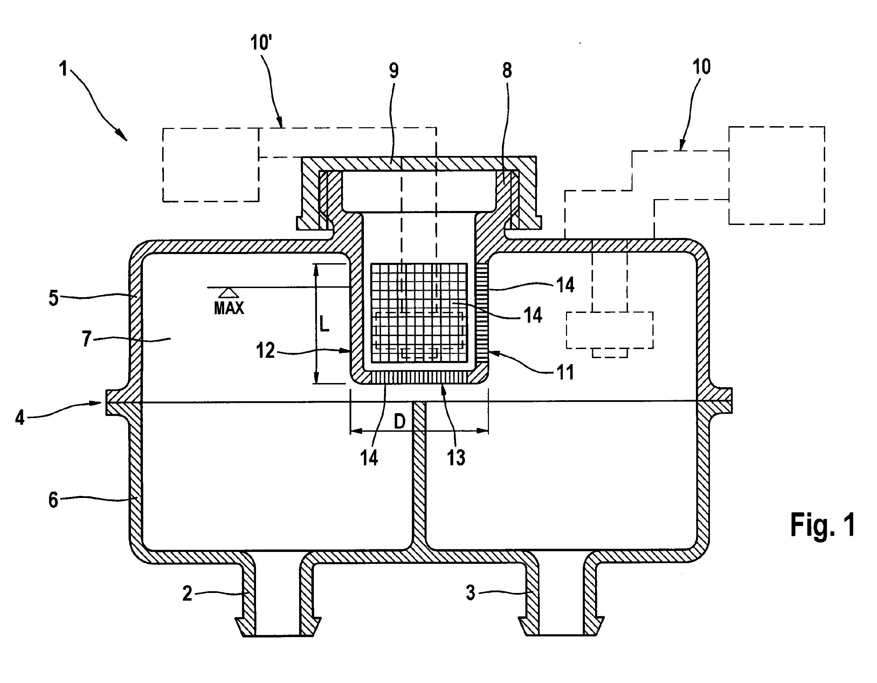

Fig. 1 bis 5 zeigen Ausführungsbeispiele eines erfindungsgemäßen Ausgleichsbehälters 1,20,40, dessen Aufbau und Funktion grundsätzlich dem Aufbau und Funktion eines bekannten Ausgleichsbehälters entspricht.

Wie Fig. 1 zeigt, ist der Ausgleichsbehälter 1 in der Regel mit einem nicht dargestellten Hauptzylinder über Behälterstutzen 2,3 verbunden und an diesem befestigt.
Der Ausgleichsbehälter 1 weist ein Gehäuse 4 mit wenigstens einer Druckmittelkammer 7 auf, wobei das Gehäuse 4 ein Gehäuseoberteil 5 sowie ein Gehäuseunterteil 6 umfasst, welche an ihren Rändern und nicht dargestellten Zwischenwänden miteinander verschweißt sind.

Zum Befüllen vom Ausgleichsbehälter 1 ist ein zylindrischer Einfüllstutzen 8 vorgesehen, der rechtwinklig von einer Oberseite des Gehäuseoberteils 5 vorsteht. Ein Deckel 9 dient dem Verschluß vom Einfüllstutzen 8. Damit wechselnde Flüssigkeitsstände keinen pneumatischen Druckaufbau initiieren, sind Mittel zum Druckausgleich zwischen einem freien Flüssigkeitsspiegel von der Druckmittelkammer 7 und einer Umgebungsatmosphäre vorgesehen. Dieser Druckausgleich erfolgt über einen Luftaustausch, welcher üblicherweise durch geeignete Mittel im Deckel 9 realisiert sind. Dadurch ist sicher gestellt, dass ein Adapterteil eines Befüllautomaten pneumatisch dicht am Einfüllstutzen 8 befestigt werden kann.

Der Ausgleichsbehälter 1 weist des weiteren eine Behälterwarnvorrichtung 10,10' zum Überwachen des Behälterfüllstandes des Ausgleichsbehälters 1 auf. Die Behälterwarnvorrichtung 10 ist für eine optimierte Raumausnutzung im - in Richtung Druckmittelkammer 7 verlängerten - Einfüllstutzen 8 integriert vorgesehen, was nur schematisch angedeutet ist. Zu diesem Zweck ist der Einfüllstutzen 8 etwas größer als ein Schwimmer der Behälterwarnvorrichtung 10 derart dimensioniert, dass der Einfüllstutzen prinzipiell eine Führungsfunktion für den verschieblichen Schwimmer erfüllen kann. Die Behälterwarnvorrichtung 10,10' umfasst in der Regel eine Schalteinheit mit einem Kontaktträger und einem daran angeformten Steckverbinder sowie dem Schwimmer mit einem darin angeordneten Magneten als magnetischen Geber, wobei der Schwimmer auf dem Kontaktträger längs verschiebbar angeordnet ist. In den Kontaktträger sind Kontaktfahnen sowie ein Reed-Kontakt als Schaltelement eingespritzt, bzw. an diesem befestigt.

Andere Ausführungsformen des Ausgleichsbehälters 1 sehen vor, dass sich die Schalteinheit von einer Seitenwand in die Druckkammern erstreckt, wobei der magnetische Geber über der Schalteinheit angeordnet ist.

Auch eine Anordnung der Schalteinheit am Boden des Ausgleichsbehälters ist denkbar.

Sobald der Magnet durch Absinken des Behälterfüllstandes einen Schaltpunkt des Reed-Kontaktes passiert, schließen sich Schaltzungen des Reed-Schalters durch das erzeugte Magnetfeld des Magneten, indem die magnetische Anziehungskraft der Schaltzungen die Federwirkung der einzelnen Schaltzungen übersteigt. Der Reed-Kontakt kann als Schließer bzw. NO-Schalter vorgesehen sein, bei welchem die Schaltzungen in Ruhestellung geöffnet sind. Jedoch ist auch der Einsatz eines als Öffner bzw. NC-Schalter ausgebildeten Reed-Kontaktes möglich, welcher im Ruhezustand geschlossene Schaltzungen aufweist, die unter Einwirkung einer Magnetkraft geöffnet werden. Durch den Schaltvorgang wird ein Signal für eine elektronische Schalteinheit der Kraftfahrzeugbremsanlage generiert.

Wie angedeutet ist, kann die Behälterwarnvorrichtung 10,10' im Bereich des Deckels 9 oder im Bereich des Gehäuses 4 angeordnet sein.

Weiter weist der Ausgleichsbehälter 1 einen einstückig am Gehäuse 4 angeformten Füllfilter 11 auf. Der Füllfilter 11 ist bevorzugt im Bereich vom verlängerten Einfüllstutzen 8 so platziert, dass er im Einfüllstutzen 8 platzierte und abnehmbare Bauteile der Behälterwarnvorrichtung 10,10' von der Druckmittelkammer 7 abtrennt, und einen Schmutzeintrag in den Ausgleichsbehälter 1 insbesondere beim Nachfüllen von Druckmittel oder beim Neubefüllen verhindert. Der Füllfilter 11 umfasst eine Wandung 12 - die prinzipiell dem verlängerten Einfüllstutzen 8 zugerechnet werden kann, sowie einen Boden 13.

Wie Fig. 1 zu entnehmen ist, sind die Wandung 12 sowie der Boden 13 des Füllfilters 11 an das Gehäuseoberteil 5 des Ausgleichsbehälters 1 angeformt und die Wandung 12 erstreckt sich an den Behälterfüllstutzen 8 anschließend in die Druckmittelkammer 7. Eine fehlerhafte Montage des Füllfilters 11 ist dadurch ausgeschlossen.

Der Füllfilter 11 wird einstückig bei der Herstellung des Gehäuseoberteiles 5 durch Kunststoffspritzgußverfahren an dieses angespritzt. Dabei werden durch eine geeignete Ausgestaltung des Spritzwerkzeuges gleichzeitig Filteröffnungen 14 mit im Mittel rund 50 bis 500 µm Porengröße - besonders bevorzugt ist eine mittlere Porengröße von 300 µm - in Wandung 12 und Boden 13 eingebracht. Aus Fig. 1 ist zu erkennen, dass der Bereich der Filteröffnungen 14 in der Wandung 12 über eine MAX-Marke des Ausgleichsbehälters 1 hinausgeht, welche den maximalen Füllstand des Ausgleichsbehälters 1 angibt. Damit erfolgt auch eine Belüftungsfunktion in jedem Fall über den Füllfilter 11, so dass in jedem Falle eine Filterung, auch bei maximalem Füllstand und bei besonders beschleunigter Druckmittelbefüllung gewährleistet ist.

Ebenso ist es jedoch auch denkbar, lediglich im Bodenbereich die Filteröffnungen 14 vorzusehen und in der Wandung 12 über der MAX-Marke nicht dargestellte Öffnungen zum Druckausgleich anzuordnen.

Durch die gleichzeitige Herstellung der Filteröffnungen 14 bei der Herstellung des Gehäuseoberteiles 5 kann eine Nachbearbeitung des Gehäuseoberteiles 5 entfallen. Mit optischen Mitteln können die Filteröffnungen 14 bei einer nachfolgenden Funktionsprüfung kontrolliert werden.

Weiter kann eine Länge L und ein Durchmesser D des Füllfilters 11 je nach Bedarf festgelegt werden.

Im Rahmen der Erfindung ist es auch denkbar, alternativ zu den beschriebenen Filteröffnungen 14 separate Filterelemente mit Filteröffnungen in die Wandung 12 und/oder den Boden 13 einzuspritzen, um damit teure Spezialwerkzeuge zu vermeiden.

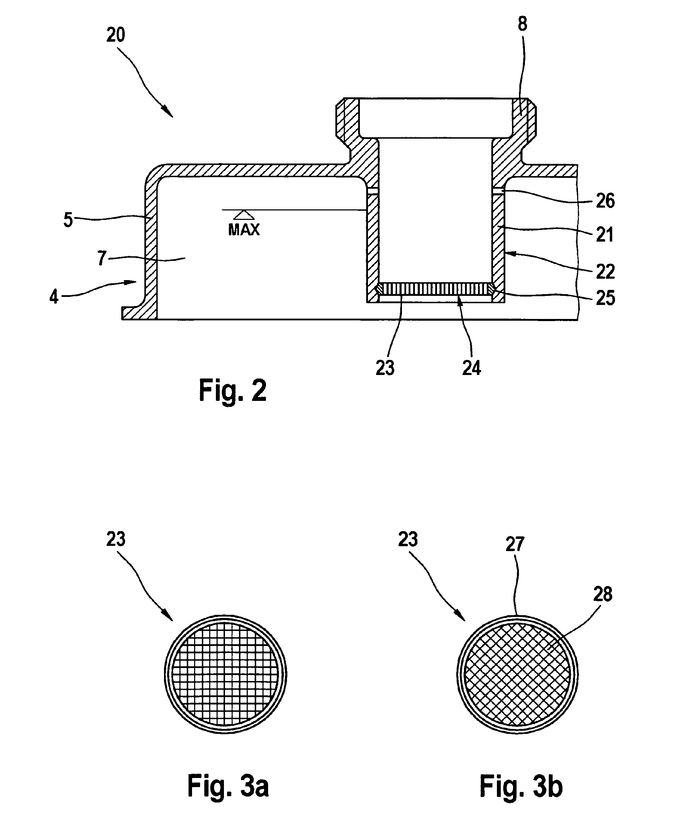

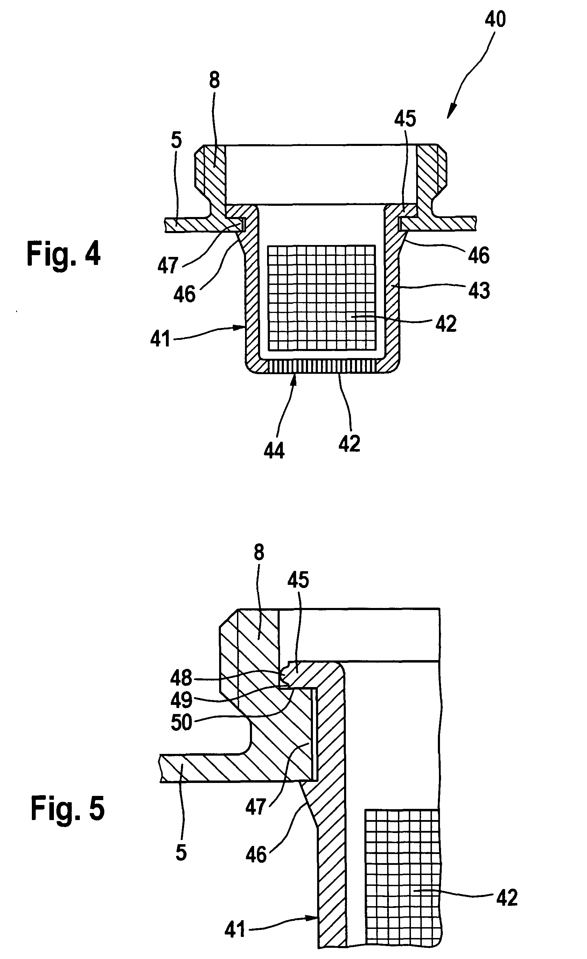

In Fig. 2 ist ein zweites, nicht beanspruchtes Ausführungsbeispiel des Ausgleichsbehälters 20 dargestellt. Dieses sowie auch ein drittes, in Fig. 4 dargestelltes Ausführungsbeispiel unterscheiden sich zum ersten Ausführungsbeispiel gemäß Fig. 1 lediglich in der Ausgestaltung des Füllfilters, so dass auf eine erneute Beschreibung des grundsätzlichen Aufbaus und der Funktion verzichtet werden kann. Gleiche Bauteile werden daher mit gleichen Bezugsziffern versehen.

Das zweite Ausführungsbeispiel des Ausgleichsbehälters 20 sieht vor, dass eine Wandung 21 eines Füllfilters 22 einteilig mit dem Gehäuse 4 bzw. dem Gehäuseoberteil 5 vorgesehen ist und dass ein Filterelement 23 als Boden 24 an der Wandung 21 befestigt ist. Das Filterelement 23 kann dadurch einfach und kostengünstig hergestellt werden.

Insbesondere wenn die Behälterwarnvorrichtung 10,10' neben dem Einfüllstutzen 8 angeordnet ist, kann der Füllfilter (11,22) prinzipiell als einstückig durchgehender, perforierter Bestandteil einer Wandung vom Gehäuseoberteil 5 ausgebildet sein, wobei an dem Gehäuseoberteil 5 weiterhin der rohrförmig verlängerte Einfüllstutzen 8 angeordnet ist.

Wie aus Fig. 2 ersichtlich ist, wird das Filterelement 23 in eine umlaufende Innennut 25 der Wandung 21 in einfacher Weise eingeclipst. Dabei ist es denkbar, dass das Filterelement 23 besonders kostengünstig einteilig aus einem Kunststoffmaterial hergestellt ist, wie in Fig. 3a dargestellt. Hier können aber auch bekannte Filterelemente mit einem, in ein Gehäuse 27 eingesetzten Gewebe 28 Verwendung finden, wie in Fig. 3b dargestellt.

Auch bei diesem Ausführungsbeispiel kann die Wandung 21 des Füllfilters 22 für den Luftaustausch über den Füllfilter entweder eine oder mehrere Öffnungen 26 zum Druckausgleich oder Filteröffnung aufweisen.

Ferner sind auch andere geeignete Befestigungsmethoden zur Befestigung des Filterelementes 23 an der Wandung 21 im Rahmen der Erfindung möglich.

Bei einem dritten und einem vierten Ausführungsbeispiel gemäß Fig. 4 und 5 ist ein Füllfilter 41 des Ausgleichsbehälters 40 einteilig aus einem Kunststoffwerkstoff vorgesehen und weist Filteröffnungen 42 in einer Wandung 43 und einem Boden 44 auf, welche bei der Herstellung des Füllfilters 41 hergestellt werden. Der separate Füllfilter 41 ist hierdurch einfach und kostengünstig herstellbar. Auch bei dieser Ausführungsform kann eine Beschädigung von Filtergewebe ausgeschlossen werden.

Zum Einsatz in den Einfüllstutzen 8 weist der Füllfilter 41 einen umlaufenden Kragen 45 auf. Weiter sind zu einer gesicherten Positionierung des Füllfilter 41 an einer Außenseite der Wandung 43 Haltemittel in Form von Schnappelementen 46 angeformt vorgesehen, welche den Füllfilter 41 durch Einschnappen hinter einem Kragen 47 des Einfüllstutzens 8 im Ausgleichsbehälter 40 sichern. Ein Eindringen von Schmutzpartikel durch eine fehlerhafte Montage des Füllfilters 41 ist somit nicht möglich und die Montage des Füllfilters 41 kann besonders schnell und einfach erfolgen.

Das vierte Ausführungsbeispiel gemäß Fig. 5 unterscheidet sich zum dritten Ausführungsbeispiel insbesondere darin, dass am umlaufenden Kragen 45 des Füllfilters 41 ein radial außen umlaufendes Dichtmittel, beispielsweise in Gestalt von einer Dichtlippe oder dem gezeichneten Dichtwulst 48 vorgesehen ist, der für eine hydraulische Abdichtung in Radialrichtung federnd elastisch an einem Sitz einer zylindrischen Innenwandung vom Einfüllstutzen 8 anliegt. Das Dichtmittel ist wie dargestellt an einer Außenseite 49 des Kragens 45 einstückig angeformt, und kann aus dem Werkstoff des Einfüllstutzens 8 gebildet sein. Diese Gestaltung verfügt über den Vorteil, dass eine gewissermaßen axial gerichtete Einschub- oder Montagebewegung vom Füllfilter 41 automatisch einen Abstreif- oder Reinigungserffekt, also eine Selbstreinigungswirkung, in Hinblick auf die benachbarten Dichtungsbauteile bewirkt. Zur Unterstützung dieses Effektes ist die Kontur vom Dichtwulst bevorzugt geglättet sowie ballig abgerundet ausgebildet. Eine weiter verbesserte Ausgestaltung umfasst einen Dichtwulst 48 der - im Unterschied zum Werkstoff vom Einfüllstutzen 8 - aus einem besonders dauerfest-elastischen Werkstoff ausgebildet und angeformt ist. Ein weiterer Vorteil der Radialabdichtung besteht darin, dass Schwingungen oder Erschütterungen - wie sie in Kraftfahrzeugen immer vorkommen - keine Verringerung der Dichtwirkung zwischen Füllfilter 41 und Einfüllstutzen 8 bewirken können.

Jedoch ist prinzipiell auch eine Anordnung des Dichtwulstes 48 an einer Unterseite 50 des Kragens 45 denkbar, so dass die Dichtwirkung in Axialrichtung erfolgt. Der Dichtwulst 48 ermöglicht eine einfache und sichere Abdichtung des Füllfilters 41 im Bereich der Kragen 45,47. Somit ist sichergestellt, dass auch an dieser Stelle keine Schmutzpartikel in den Ausgleichsbehälter 40 eindringen können.

Zur Verbesserung vom Druckausgleich kann die beschriebene Abdichtung weiterhin so gestaltet sein, dass zwar eine hydraulische Abdichtung und gleichzeitig eine pneumatische Durchlässigkeit vorgesehen ist, indem mit Vorteil wenigstens ein miniaturisierter Kanal, eine Perforierung oder eine Entlüftungsöffnung eingearbeitet ist.

Natürlich ist es dankbar, die Konstruktion der Abdichtung gewissermaßen umzukehren, indem das beschriebene elastische Dichtmittel am Einfüllstutzen, insbesondere an dessen Kragen 47 angeordnet wird, ohne das Wesen der Erfindung zu verlassen.

Grundsätzlich kann bei allen vorstehend beschriebenen Ausführungsbeispielen der Füllfilter 11,22,41 als Sieb vorgesehen sein.

### Bezugszeichenliste

- 1: Ausgleichsbehälter
- 2: Behälterstutzen
- 3: Behälterstutzen
- 4: Gehäuse
- 5: Gehäuseoberteil
- 6: Gehäuseunterteil
- 7: Druckmittelkammer
- 8: Einfüllstutzen
- 9: Deckel
- 10: Behälterwarnvorrichtung
- 11: Füllfilter
- 12: Wandung
- 13: Boden
- 14: Filteröffnungen

- 20: Ausgleichsbehälter
- 21: Wandung
- 22: Füllfilter
- 23: Filterelement
- 24: Boden
- 25: Innennut
- 26: Öffnung
- 27: Gehäuse
- 28: Gewebe

- 40: Ausgleichsbehälter
- 41: Füllfilter
- 42: Filteröffnung
- 43: Wandung
- 44: Boden
- 45: Kragen
- 46: Schnappelement
- 47: Kragen
- 48: Dichtwulst
- 49: Außenseite
- 50: Unterseite

- D: Durchmesser
- L: Länge

## Patentansprüche

1. Ausgleichsbehälter (1) für eine hydraulische Kraftfahrzeugbremsanlage mit einem Gehäuse (4), mit wenigstens einer Druckmittelkammer (7), mit einer einen Schwimmer umfassende Behälterwarnvorrichtung (10,10') zum Überwachen des Behälterfüllstandes des Ausgleichsbehälters (1), mit einem Einfüllstutzen (8) zum Befüllen des Ausgleichsbehälters (1), mit einem Deckel (9) zum flüssigkeitsdichten Verschließen des Einfüllstutzens (8), mit Mitteln zum Druckausgleich des Ausgleichsbehälters (1), und mit einem Füllfilter (11,22), wobei der Füllfilter (11) an das Gehäuse (4) des Ausgleichsbehälters (1) einstückig angeformt und topfförmig mit einer Wandung (12) und mit einem Boden (13) ausgebildet ist, **dadurch gekennzeichnet, dass** die einen Schwimmer umfassende Behälterwarnvorrichtung (10,10') in dem Einfüllstutzen (8) integriert angeordnet ist und der Füllfilter (11) im Bereich vom Einfüllstutzen (8) sowie unterhalb von der Behälterwarnvorrichtung (10,10') angeordnet ist und sich an den Behälterfüllstutzen (8) anschließend in die Druckmittelkammer (7) erstreckt, wobei die Wandung (12) und der Boden (13) von dem Füllfilter (11) Filteröffnungen (14) aufweist, welche sowohl unterhalb als auch oberhalb in Bezug auf ein maximal zulässiges Behälterfüllstandsniveau angeordnet sind.

2. Ausgleichsbehälter nach Anspruch 1, **dadurch gekennzeichnet, dass** der Einfüllstutzen (8) zur radialen Führung vom Schwimmer in Richtung Druckmittelkammer (7) verlängert ausgebildet ist.

3. Ausgleichsbehälter (1) nach Anspruch 1, **dadurch gekennzeichnet, dass** der Füllfilter (11) einstückig ausgebildet ist.

4. Ausgleichsbehälter (1) nach Anspruch 1, **dadurch gekennzeichnet, dass** der Füllfilter (11,22) aus einem Werkstoff des Gehäuses (4) des Ausgleichsbehälters (1) ausgebildet ist, und an das Gehäuse (4) angespritzt vorgesehen ist.

5. Ausgleichsbehälter nach einem der Ansprüche 1 bis 4, **dadurch gekennzeichnet, dass** der Füllfilter (11,22) Filteröffnungen (14) mit einer Maschen- oder Porenweite in einem Bereich von etwa ≥ 50 bis etwa ≤500µm aufweist.

6. Ausgleichsbehälter (1) nach Anspruch 5, **dadurch gekennzeichnet, dass** der Füllfilter(11) Filteröffnungen (14) aufweist, welche bei der Herstellung des Gehäuses (4) hergestellt werden.

7. Ausgleichsbehälter (40) für eine hydraulische Kraftfahrzeugbremsanlage mit einem Gehäuse (4) mit wenigstens einer Druckmittelkammer (7), wobei das Gehäuse (4) ein Gehäuseoberteil (5) sowie ein Gehäuseunterteil (6) aufweist, mit einer einen Schwimmer umfassende Behälterwarnvorrichtung (10) zum Überwachen des Behälterfüllstandes des Ausgleichsbehälters (40), mit einem Einfüllstutzen (8) zum Befüllen des Ausgleichsbehälters (40), mit einem Deckel (9) zum flüssigkeitsdichten Verschleißen des Einfüllstutzens (8), mit Mitteln zum Druckausgleich des Ausgleichsbehälters (40) und mit einem Füllfilter (41) mit einer Wandung (43) und mit einem Boden (44), wobei der Füllfilter (41) einteilig vorgesehen ist und Filteröffnungen (42) aufweist, welche bei der Herstellung des Füllfilters (41) hergestellt werden, wobei der Füllfilter (41) einen umlaufenden Kragen (45) aufweist, mittels welchem er in den Einfüllstutzen (8) einsetzbar ist, und an der Wandung (43) Haltemittel (46) angeformt vorgesehen sind, welche den Füllfilter (41) im Ausgleichsbehälter (40) sichern, **dadurch gekennzeichnet, dass** die einen Schwimmer umfassenden Behälterwarnvorrichtung (10,10') in dem Einfüllstutzen (8) integriert angeordnet ist und der Füllfilter (41) im Bereich vom Einfüllstutzen (8) sowie unterhalb von der Behälterwarnvorrichtung (10,10') angeordnet ist, wobei die Wandung (43) und der Boden (44) von dem Füllfilter (41) Filteröffnungen (42) aufweist, welche sowohl unterhalb als auch oberhalb in Bezug auf ein maximal zulässiges Behälterfüllstandsniveau angeordnet sind.

8. Ausgleichsbehälter (40) nach Anspruch 7, **dadurch gekennzeichnet, dass** der Füllfilter (41) aus einem Kunststoff ausgebildet ist.

9. Ausgleichsbehälter (40) nach Anspruch 7 oder 8, **dadurch gekennzeichnet, dass** die Haltemittel (46) als Schnappelemente (46) ausgebildet sind, welche nach Einsetzen des Füllfilters (41) in den Ausgleichsbehälter (40) hinter einem Kragen (47) des Einfüllstutzens (8) einschnappen.

10. Ausgleichsbehälter (40) nach einem der Ansprüche 7 bis 9, **dadurch gekennzeichnet, dass** an dem umlaufenden Kragen (45) des Füllfilters (41) ein umlaufender Dichtwulst (48) vorgesehen ist.

11. Ausgleichsbehälter (1,20,40) nach einem der Ansprüche 1 bis 10, **dadurch gekennzeichnet, dass** der Füllfilter (11,22,41) als Sieb vorgesehen ist.

## Claims

1. Equalizing container (1) for a hydraulic motor-vehicle brake system having a housing (4), having at least one pressure-medium chamber (7), having a container warning apparatus (10, 10') which comprises a float for monitoring the container filling level of the equalizing container (1) , having a filler neck (8) for filling the equalizing container (1), having a lid (9) for closing the filler neck (8) in a liquid-tight manner, having means for pressure equalization of the equalizing container (1), and having a filling filter (11, 22), the filling filter (11) being formed integrally onto the housing (4) of the equalizing container (1) and being of cup-shaped configuration with a wall (12) and with a bottom (13), **characterized in that** the container warning apparatus (10, 10') which comprises a float is arranged such that it is integrated in the filler neck (8), and the filling filter (11) is arranged in the region of the filler neck (8) and below the container warning apparatus (10, 10') and extends into the pressure-medium chamber (7) in an adjacent manner to the container filler neck (8), the wall (12) and the bottom (13) of the filling filter (11) having filter openings (14) which are arranged both below and above a maximum permissible container filling level.

2. Equalizing container according to Claim 1, **characterized in that** the filler neck (8) is configured such that it is extended in the direction of the pressure-medium chamber (7), for radially guiding the float.

3. Equalizing container (1) according to Claim 1, **characterized in that** the filling filter (11) is of single-piece configuration.

4. Equalizing container (1) according to Claim 1, **characterized in that** the filling filter (11, 22) is formed from a material of the housing (4) of the equalizing container (1) and is provided such that it is moulded integrally onto the housing (4).

5. Equalizing container according to one of Claims 1 to 4, **characterized in that** the filling filter (11, 22) has filter openings (14) with an aperture or pore width in a range from approximately ≥ 50 to approximately ≤ 500 µm.

6. Equalizing container (1) according to Claim 5, **characterized in that** the filling filter (11) has filter openings (14) which are produced during the production of the housing (4).

7. Equalizing container (40) for a hydraulic motor-vehicle brake system having a housing (4) with at least one pressure-medium chamber (7), the housing (4) having a housing upper part (5) and a housing lower part (6), having a container warning apparatus (10) which comprises a float for monitoring the container filling level of the equalizing container (40), having a filler neck (8) for filling the equalizing container (40), having a lid (9) for closing the filler neck (8) in a liquid-tight manner, having means for pressure equalization of the equalizing container (40) and having a filling filter (41) with a wall (43) and with a bottom (44), the filling filter (41) being provided in one piece and having filter openings (42) which are produced during the production of the filling filter (41), the filling filter (41) having a circumferential collar (45), by means of which it can be inserted into the filler neck (8), and holding means (46) being provided on the wall (43) in an integrally moulded manner, which holding means (46) secure the filling filter (41) in the equalizing container (40), **characterized in that** the container warning apparatus (10, 10') which comprises a float is arranged such that it is integrated in the filler neck (8), and the filling filter (41) is arranged in the region of the filler neck (8) and below the container warning apparatus (10, 10'), the wall (43) and the bottom (44) of the filling filter (41) having filter openings (42) which are arranged both below and above a maximum permissible container filling level.

8. Equalizing container (40) according to Claim 7, **characterized in that** the filling filter (41) is formed from a plastic.

9. Equalizing container (40) according to Claim 7 or 8, **characterized in that** the holding means (46) are configured as snap-action elements (46) which snap in behind a collar (47) of the filler neck (8) after insertion of the filling filter (41) into the equalizing container (40).

10. Equalizing container (40) according to one of Claims 7 to 9, **characterized in that** a circumferential sealing bead (48) is provided on the circumferential collar (45) of the filling filter (41).

11. Equalizing container (1, 20, 40) according to one of Claims 1 to 10, **characterized in that** the filling filter (11, 22, 41) is provided as a screen.

## Revendications

1. Récipient de compensation (1) pour installation hydraulique de freinage pour véhicule automobile, le récipient présentant
un boîtier (4),
au moins une chambre (7) à fluide sous pression, un dispositif (10, 10') de surveillance du récipient comprenant un flotteur et surveillant l'état de remplissage du récipient de compensation (1),
une tubulure de remplissage (8) qui permet de remplir le récipient de compensation (1),
un couvercle (9) qui ferme de manière étanche au liquide la tubulure de remplissage (8),
des moyens de compensation de pression du récipient de compensation (1) et
un filtre de remplissage (11, 22),
le filtre de remplissage (11) étant formé d'un seul tenant avec le boîtier (4) du récipient de compensation (1) et étant configuré en forme de pot doté d'une paroi (12) et d'un fond (13),
**caractérisé en ce que**
le dispositif (10, 10') de surveillance du récipient qui comprend un flotteur est intégré dans la tubulure de remplissage (8) et le filtre de remplissage (11) est disposé au niveau de la tubulure de remplissage (8) et en dessous du dispositif (10, 10') de surveillance du récipient et s'étend dans la chambre (7) pour fluide sous pression en se raccordant à la tubulure (8) de remplissage du récipient et
**en ce que** la paroi (12) et le fond (13) du filtre de remplissage (11) présentent des ouvertures de filtre (14) disposées aussi bien au-dessus qu'en dessous du niveau maximum admissible de remplissage du récipient.

2. Récipient de compensation selon la revendication 1, **caractérisé en ce que** la tubulure de remplissage (8) est prolongée en direction de la chambre (7) à fluide sous pression pour guider radialement le flotteur.

3. Récipient de compensation selon la revendication 1, **caractérisé en ce que** le filtre de remplissage (11) est formé d'un seul tenant.

4. Récipient de compensation selon la revendication 1, **caractérisé en ce que** le filtre de remplissage (11, 22) est formé d'un matériau du boîtier (4) du récipient de compensation (1) et est moulé par injection sur le boîtier (4).

5. Récipient de compensation selon l'une des revendications 1 à 4, **caractérisé en ce que** le filtre de remplissage (11, 22) présente des ouvertures de filtre (14) dont la taille des mailles ou des pores est de l'ordre d'environ ≥ 50 à environ ≤ 500 µm.

6. Récipient de compensation selon l'une des revendications 1 à 5, **caractérisé en ce que** le filtre de remplissage (11) présente des ouvertures de filtre (14) réalisées lors de la fabrication du boîtier (4).

7. Récipient de compensation (40) pour installation hydraulique de freinage pour véhicule automobile, le récipient présentant
un boîtier (4) doté d'au moins une chambre (7) à fluide sous pression, le boîtier (4) présentant une partie supérieure de boîtier (5) et une partie inférieure de boîtier (6),
un dispositif (10) de surveillance du récipient comprenant un flotteur et surveillant l'état de remplissage du récipient de compensation (40),
une tubulure de remplissage (8) qui permet de remplir le récipient de compensation (40),
un couvercle (9) qui ferme de manière étanche au liquide la tubulure de remplissage (8),
des moyens de compensation de pression du récipient de compensation (40) et
un filtre de remplissage (41) doté d'une paroi (43) et d'un fond (44), le filtre de remplissage (41) étant formé d'un seul tenant et présentant des ouvertures de filtre (42) qui sont réalisées lors de la fabrication du filtre de remplissage (41), le filtre de remplissage (41) présentant un collet périphérique (45) par lequel il peut être inséré dans la tubulure de remplissage (8),
des moyens de maintien (46) étant formés sur la paroi (43) et fixant le filtre de remplissage (41) dans le récipient de compensation (40),
**caractérisé en ce que**
le dispositif (10, 10') de surveillance du récipient qui comprend un flotteur est intégré dans la tubulure de remplissage (8) et le filtre de remplissage (41) est disposé au niveau de la tubulure de remplissage (8) et en dessous du dispositif (10, 10') de surveillance du récipient et
**en ce que** la paroi (43) et le fond (44) du filtre de remplissage (41) présentent des ouvertures de filtre (42) disposées aussi bien au-dessus qu'en dessous du niveau maximum admissible de remplissage du récipient.

8. Récipient de compensation (40) selon la revendication 7, **caractérisé en ce que** le filtre de remplissage (41) est réalisé en matière synthétique.

9. Récipient de compensation (40) selon les revendications 7 ou 8, **caractérisé en ce que** les moyens de maintien (46) sont configurés comme éléments d'encliquetage (46) qui, après le placement du filtre de remplissage (41) dans le récipient de compensation (40), s'encliquettent derrière un collet (47) de la tubulure de remplissage (8).

10. Récipient de compensation (40) selon l'une des revendications 7 à 9, **caractérisé en ce qu'**un bourrelet d'étanchéité (48) périphérique est prévu sur le collet périphérique (45) du filtre de remplissage (41).

11. Récipient de compensation (1, 20, 40) selon l'une des revendications 1 à 10, **caractérisé en ce que** le filtre de remplissage (11, 22, 41) est prévu sous la forme d'un tamis.
